# EUROPÄISCHE PATENTSCHRIFT

(11) **EP 4 662 599 B1**
(45) Veröffentlichungstag und Bekanntmachung des Hinweises auf die Patenterteilung: **04.11.2026**
(21) Anmeldenummer: 24714801.8
(22) Anmeldetag: 12.03.2024
(51) Int. Cl.: G06N 3/084, G06N 3/0985, G05B 13/02, G05B 17/02

(54) **VERFAHREN UND SYSTEM ZUM BETRIEB EINES TECHNISCHEN GERÄTS MIT EINEM META-LEARNING-MODELL**
METHOD AND SYSTEM FOR OPERATING A TECHNICAL DEVICE USING A META-LEARNING MODEL
PROCÉDÉ ET SYSTÈME DE FONCTIONNEMENT D'UN APPAREIL TECHNIQUE À L'AIDE D'UN MODÈLE MÉTA-LEARNING

(30) Priorität: 17.03.2023 EP 23162672
(43) Veröffentlichungstag der Anmeldung: 17.12.2025
(73) Patentinhaber: Siemens Aktiengesellschaft, 80333 München (DE)
(72) Erfinder: BIERWEILER, Thomas, 76187 Karlsruhe (DE); EDER, Jana, 1210 Wien (AT); FRIKHA, Ahmed, 76187 Karlsruhe (DE); HOLLY, Stephanie, 1210 Wien (AT); SCHALL, Daniel, 1210 Wien (AT); VON DOSKY, Stefan, 76187 Karlsruhe (DE)
(74) Vertreter: Siemens Patent Attorneys
(86) Internationale Anmeldenummer: PCT/EP2024/056583
(87) Internationale Veröffentlichungsnummer: WO 2024/194099

(56) Entgegenhaltungen:
- ANUSHA NAGABANDI ET AL: "Learning to Adapt in Dynamic, Real-World Environments Through Meta-Reinforcement Learning", ARXIV.ORG, CORNELL UNIVERSITY LIBRARY, 201 OLIN LIBRARY CORNELL UNIVERSITY ITHACA, NY 14853, 30 March 2018 (2018-03-30), XP080997507

## Beschreibung

Die Erfindung betrifft ein computer-implementiertes Verfahren und ein System zum Betrieb eines technischen Geräts mit einem Meta-Learning-Modell, wobei das technische Gerät Betriebsmodi aufweist, welche durch jeweilige vorbestimmte Geräte-Parameter definiert sind, sowie ein Computer-Programm-Produkt.

Geräte im industriellen Umfeld werden häufig mit Modellen auf Basis künstlicher Intelligenz (kurz "KI") betrieben, um beispielsweise eine vorausschauende Wartung durchzuführen. Dies erfolgt indem mithilfe eines Modells aus aktuellen Betriebsparametern ein zukünftiger Betrieb prognostiziert wird.

Ein Modell muss aufwändig trainiert werden und ist dann häufig nur für eine Installation eines Geräts gültig. Wird also ein baugleiches Gerät anders installiert oder angeordnet, so muss nach dem Stand der Technik das Modell erneut aufwändig trainiert werden.

In der Veröffentlichung ANUSHA NAGABANDI ET AL: "Learning to Adapt in Dynamic, Real-World Environments Through Meta-Reinforcement Learning", ARXIV.ORG, CORNELL UNIVERSITY LIBRARY, 201 OLIN LIBRARY CORNELL UNIVERSITY ITHACA, NY 14853, 30. März 2018 (2018-03-30), XP080997507 ist ein spezielles Verfahren zum Stichproben-effizienten Lernen mithilfe von Meta-Lernen gezeigt, um ein dynamisches Modell vorab so zu trainieren, sodass - bei Kombination mit aktuellen Daten - das Modell schnell an einen lokalen Kontext angepasst werden kann.

Es ist im Stand der Technik sehr schwierig, ein KI-Modell, das auf einem Gerät, wie einer Pumpe, trainiert wurde, welches sich in einer Umgebung befindet, auf das identische oder ähnliche Geräte in einer anderen Umgebung zu übertragen.

Das Umfeld beziehungsweise die Betriebsumgebung bezieht sich beispielsweise auf Einbauzustand, Verschraubung, Bodenbeschaffung oder benachbarte Anlagen. Die Umgebung kann die Daten beeinflussen und führt häufig unerwünscht zu anderen Datenverteilungen in den Messwerten.

Es ist Aufgabe der Erfindung eine Lösung bereitzustellen, in welcher ein Modell für ein Gerät auf einfache Weise erzeugt werden kann und das Modell dennoch genau ist, auch wenn es für einen zusätzliche Betriebsmodus nicht trainiert ist.

Die erfindungsgemäße Aufgabe wird durch ein computer-implementiertes Verfahren zum Betrieb eines technischen Geräts mit einem Meta-Learning-Modell gelöst, wobei das technische Gerät Betriebsmodi aufweist, welche durch jeweilige vorbestimmte Geräte-Parameter definiert sind, und folgende Schritte ausgeführt werden:
a) Erzeugen und Initialisieren des Modells für das technische Gerät in Betriebsumgebungen, welche durch jeweilige Betriebsparameter definiert sind, und das Modell durch eine erste Menge an Modell-Parametern definiert ist,
b) Erzeugung einer Menge von Machine Learning Aufgaben, wobei eine Aufgabe aus der Menge von Aufgaben einen Betrieb des technischen Geräts in einer Betriebsumgebung mit Betriebsparametern definiert, und alle Aufgaben aus der Menge von Aufgaben in allen Betriebsmodi für das technische Gerät übereinstimmen,
c) Auswählen zumindest einer Aufgabe aus der Menge von Aufgaben,
d) Bestimmen einer ersten Teilmenge in Form von Stichproben mit einer vordefinierten ersten Anzahl an Aufgaben aus der Menge von Aufgaben, welche einen zulässigen Betriebsmodus aufweisen,
e) Bestimmen einer zweiten Teilmenge in Form von Stichproben mit einer vordefinierten zweiten Anzahl an Aufgaben aus der Menge von Aufgaben, welche alle Betriebsmodi aufweisen,
f) Trainieren des Modells mit der ersten Teilmenge mithilfe von Aktualisierungen nach einem Gradienten-Verfahren,
g) Trainieren des Modells mit der zweiten Teilmenge, mithilfe von Aktualisierungen nach einem Gradienten-Verfahren,
h) Bestimmen einer adaptierten zweiten Menge an Modell-Parametern aus dem Modell mithilfe von Aktualisierungen nach einem Gradienten-Verfahren,
i) Fortsetzen bei Schritt d), solange, bis ein vorbestimmtes erstes Abbruchkriterium erreicht ist,
j) Durchführen eines Meta-Updates der ersten Menge an Modell-Parametern für das Modell mithilfe der adaptierten zweiten Menge an Modell-Parametern auf Basis der ersten Menge an Modell-Parametern,
k) Fortsetzen bei Schritt c), solange, bis ein vorbestimmte zweites Abbruchkriterium erreicht ist,
l) Erneutes Trainieren des Modells mit zumindest einer weiteren Aufgabe,
m) Betrieb des technischen Geräts mit dem Modell.

Unter der Menge von Aufgaben sind Meta-Trainings-Aufgaben zu verstehen.

Unter der ersten Anzahl an Aufgaben aus der Menge von Aufgaben ist ein sogenanntes "Support Set" zu verstehen, welche einen zulässigen Betriebsmodus für das technische Gerät aufweisen.

Unter der zweiten Anzahl an Aufgaben aus der Menge von Aufgaben ist ein sogenanntes "Query Set" zu verstehen, welche alle Betriebsmodi für das technische Gerät aufweisen.

Das erste und/oder das zweite Abbruchkriterium kann sich auf ein minimales Maß an Änderungen in dem Gradienten-Verfahren beziehen, im Sinne einer Konvergenz.

Dadurch ist es möglich ein KI-Modell beispielsweise in einer Laborumgebung mit zulässigen Betriebsmodi zu trainieren und dieses KI-Modell dann auf eine Neuinstallation in einer hohen Genauigkeit des Modells zu übertragen, ohne dass das Modell angepasst oder neu trainiert werden muss (Plug & Classify).

Dies ermöglicht die Skalierung von KI-Modellen in industriellen Anwendungen, indem Modelle ohne Mehraufwand wiederverwendet werden können.

Das Training des technischen Geräts kann alle Betriebsfälle umfassen, sowohl zulässige Betriebsmodi als auch unzulässige Betriebsmodi, welche beispielsweise eine Betriebsanomalie hervorrufen können.

Betriebsumgebungen können beispielsweise die Montage des technischen Geräts, sowie eine Leitungsführung oder auch Einflüsse benachbarter Vorrichtungen abbilden.

Meta-Learning im maschinellen Lernen bezeichnet Lernalgorithmen, die von anderen Lernalgorithmen lernen. Dabei können auch Algorithmen für maschinelles Lernen verwendet werden, welche lernen, wie man die Vorhersagen anderer Algorithmen für maschinelles Lernen im Bereich des Ensemble-Lernens am besten kombiniert.

Betriebsumgebungen sind Umgebungen, in welchen das technische Gerät, wie eine elektrische Pumpe, betrieben wird, beispielsweise Betriebsspannungsbereiche, Temperaturbereiche, Drehzahlbereiche der Pumpe, etc.

Betriebsumgebungen sind durch jeweilige Betriebsparameter definiert, wie Bereichsgrenzen für Spannungen, Temperaturen, Motoren-Kennzahlen der Pumpe, etc.

Es gibt verschiedene Betriebsmodi für das technische Gerät, wie zulässige oder unzulässige Betriebsmodi.

Zulässige Betriebsmodi beschreiben beispielsweise einen störungsfreien oder vorteilhaften Betrieb des technischen Geräts, in welchem eine gute Leistung, ein effizienter Betrieb und ein geringer Verschleiß prognostiziert werden kann.

Unzulässige Betriebsmodi beschreiben beispielsweise einen unerwünschten oder beeinträchtigten Betrieb des technischen Geräts, durch welchen eine Störung, eine unzureichende Effizienz beim Betrieb oder ein früher Verschleiß prognostiziert werden kann.

Als Beispiel für zulässige Betriebsmodi der Pumpe kann ein Modus für eine hohe Durchflussmenge einer Pumpe oder ein Modus für eine geringe Leistungsaufnahme einer Pumpe dienen.

Als Beispiel für unzulässige Betriebsmodi der Pumpe kann ein Betriebsmodus sein, welcher dazu führt, dass der Verschleiß dauerhaft zu hoch ist oder wenn die Zuverlässigkeit der Pumpe nicht aufrechterhalten werden kann.

Der Betrieb des technischen Geräts in einer Betriebsumgebung mit somit durch Betriebsparameter definiert, welche auch Betriebsumgebungen abbilden.

Dementsprechend können Betriebsparameter beziehungsweise Betriebsumgebungen in Modell-Parameter abgeleitet werden, welche das Modell definieren.

In einer Weiterbildung der Erfindung ist es vorgesehen, dass das Gradienten-Verfahren der Gradient-Descent-Algorithmus ist.

Dadurch wird erreicht, dass auf besonders effiziente Weise eine rasche Konvergenz des iterativen oder rekursiven Verfahrens erzielt wird.

In einer Weiterbildung der Erfindung ist es vorgesehen, dass das Trainieren des Modells mit der zweiten Teilmenge mithilfe einer Aktualisierung nach einem modifizierten Gradient-Descent-Algorithmus erfolgt, vorzugsweise anhand von Ableitungen zweiter Ordnung.

Dadurch wird erreicht, dass auf besonders effiziente Weise eine besonders rasche Konvergenz des iterativen oder rekursiven Verfahrens erzielt wird.

In einer Weiterbildung der Erfindung ist es vorgesehen, dass das Bestimmen der adaptierten zweiten Menge an Modell-Parametern mithilfe einer Aktualisierung nach einem modifizierten Gradient-Descent-Algorithmus erfolgt.

Dadurch wird erreicht, dass auf besonders effiziente Weise eine weiter verbesserte und rasche Konvergenz des iterativen oder rekursiven Verfahrens erzielt wird.

In einer Weiterbildung der Erfindung ist es vorgesehen, dass das vorbestimmte erstes Abbruchkriterium das Erreichen einer vorbestimmten ersten Anzahl an Wiederholungen ist.

Dadurch wird erreicht, dass auf besonders einfache Weise ein einfach zu implementierendes Kriterium für das iterative oder rekursiven Verfahren erzielt wird.

In einer Weiterbildung der Erfindung ist es vorgesehen, dass das vorbestimmte zweite Abbruchkriterium das Erreichen einer vorbestimmten zweiten Anzahl an Wiederholungen ist.

Dadurch wird erreicht, dass auf besonders einfache Weise ein einfach zu implementierendes Kriterium für das iterative oder rekursiven Verfahren erzielt wird.

In einer Weiterbildung der Erfindung ist es vorgesehen, dass die Geräte-Parameter eine Kombination von Geräte-Kenngrößen und/oder einen Werte-Bereich für zumindest eine Geräte-Kenngröße umfassen.

Dadurch wird erreicht, dass auf besonders effiziente Weise eine weiter verbesserte und rasche Konvergenz des iterativen oder rekursiven Verfahrens erzielt wird.

Das Initialisieren des Modells im Schritt a) kann mithilfe vorbestimmter Initialisierungs-Werte erfolgen.

In einer Weiterbildung der Erfindung ist es vorgesehen, dass das Initialisieren des Modells im Schritt a) mit zufälligen Werten erfolgt.

Mit anderen Worten können die vorbestimmten Initialisierungs-Werte Zufalls-Werte sein.

Dadurch kann die Initialisierung auf besonders einfache Weise erfolgen.

Das Auswählen zumindest einer Aufgabe im Schritt c) kann mithilfe einer vorbestimmten Auswahl erfolgen.

In einer Weiterbildung der Erfindung ist es vorgesehen, dass das Auswählen zumindest einer Aufgabe im Schritt c) zufällig erfolgt.

Mit anderen Worten kann die vorbestimmte Auswahl durch Zufalls-Werte bestimmt sein.

Dadurch kann die Auswahl auf besonders einfache Weise erfolgen.

Die erfindungsgemäße Aufgabe wird durch ein System zum Betrieb eines technischen Geräts mit einem Meta-Learning-Modell, umfassend eine Rechenvorrichtung mit einem Prozessor und einem Speicher, welche dazu eingerichtet ist, das technische Gerät zu betreiben, und das System dazu konfiguriert ist, das erfindungsgemäße Verfahren auszuführen.

Die erfindungsgemäße Aufgabe wird durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: ein Ausführungsbeispiel der Erfindung als Programmcode,
- Fig. 2: eine schematische Darstellung eines Systems zum Betrieb eines technischen Geräts mit einem Modell auf Basis künstlicher Intelligenz mit den jeweiligen Eingangsgrößen,
- Fig. 3: ein Flussdiagramm des erfindungsgemäßen Verfahrens.

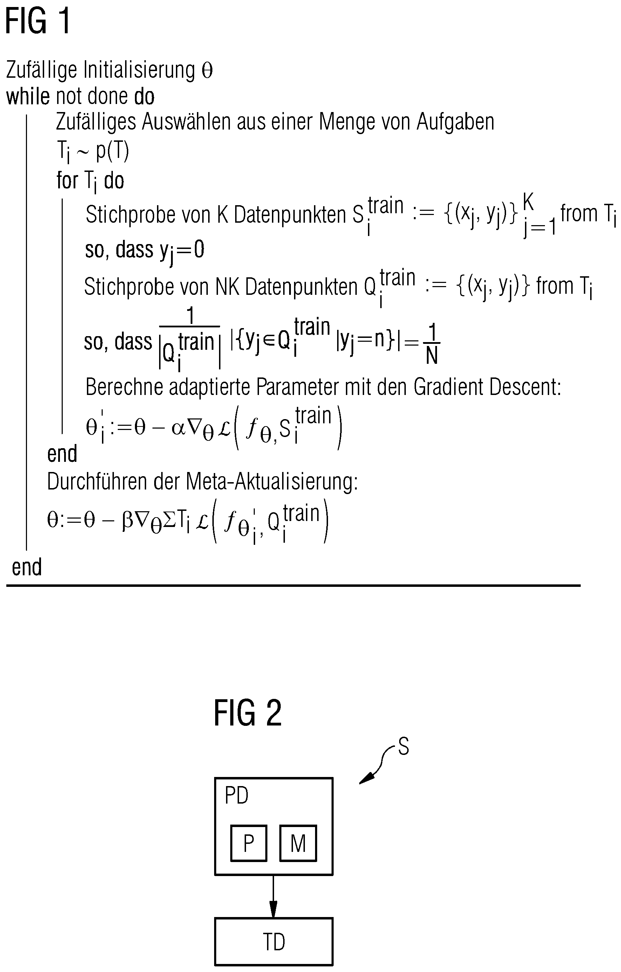

**Fig. 1** zeigt ein Ausführungsbeispiel für ein computer-Programm-Produkt in Form eines Programmcodes, bei welchem ein Meta-Lernen anhand von einer oder weiniger Klassen durchgeführt wird.

Eine Menge von Aufgaben T wird bereitgestellt, welche eine Verteilung p(T) über die Aufgaben hinweg aufweist.

Eine Modell-Architektur *f_{θ}*, welche durch den Parameter *θ* einstellbar ist.

Ferner ist eine Verlustfunktion 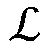 vorgegeben, sowie eine Schrittgröße der Hyperparameter *α*, *β.*

Eine Gesamt-Anzahl an Klassen N ist zur einfachen Realisierung vorgegeben.

**Fig. 2** zeigt eine schematische Darstellung eines Systems zum Betrieb eines technischen Geräts mit einem Meta-Learning-Modell.

Das System umfasst eine Rechenvorrichtung mit einem Prozessor und einem Speicher, welche dazu eingerichtet ist, das technische Gerät zu betreiben.

Das System ist dazu konfiguriert das im Nachfolgenden beschriebene Verfahren auszuführen.

Auf Basis des Systems kann auch ein computer-Programm-Produkt mit darin gespeicherten maschinenlesbaren Anweisungen bereitgestellt werden, die, wenn sie von einer Verarbeitungseinheit ausgeführt werden, diese veranlassen, das erfindungsgemäße Verfahren auszuführen.

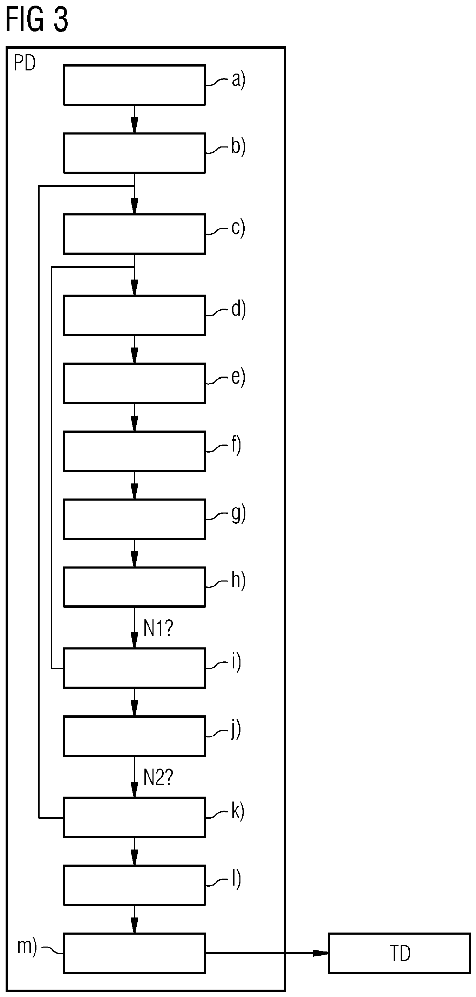

**Fig. 3** stellt ein Flussdiagramm des erfindungsgemäßen Verfahrens dar.

Das computer-implementiertes Verfahren zum Betrieb eines technischen Geräts TD mit einem Meta-Learning-Modell, wobei das technische Gerät Betriebsmodi aufweist, welche durch jeweilige vorbestimmte Geräte-Parameter definiert sind, umfasst folgende Schritte:
a) Erzeugen und zufälliges Initialisieren des Modells für das technische Gerät TD in Betriebsumgebungen, welche durch jeweilige Betriebsparameter definiert sind, und das Modell durch eine erste Menge an Modell-Parametern THETA definiert ist,
b) Erzeugung einer Menge von Maschine Learning Aufgaben, wobei eine Aufgabe aus der Menge von Aufgaben einen Betrieb des technischen Geräts TD in einer Betriebsumgebung mit Betriebsparametern definiert, und alle Aufgaben aus der Menge von Aufgaben in allen Betriebsmodi für das technische Gerät TD übereinstimmen,
c) Zufälliges Auswählen zumindest einer Aufgabe T aus der Menge von Aufgaben,
d) Bestimmen einer ersten Teilmenge in Form von Stichproben mit einer vordefinierten ersten Anzahl K1 an Aufgaben aus der Menge von Aufgaben, welche einen zulässigen Betriebsmodus aufweisen, auch als "Support Set" bezeichnet,
e) Bestimmen einer zweiten Teilmenge in Form von Stichproben mit einer vordefinierten zweiten Anzahl K2 an Aufgaben aus der Menge von Aufgaben, welche alle Betriebsmodi aufweisen, auch als "Query Set",
f) Trainieren des Modells mit der ersten Teilmenge mithilfe von Aktualisierungen nach einem Gradienten-Verfahren,
g) Trainieren des Modells mit der zweiten Teilmenge, mithilfe von Aktualisierungen nach einem Gradienten-Verfahren
h) Bestimmen einer adaptierten zweiten Menge an Modell-Parametern THETA' aus dem Modell mithilfe von Aktualisierungen nach einem Gradienten-Verfahren,
i) Fortsetzen bei Schritt d), solange, bis ein vorbestimmtes erstes Abbruchkriterium N1 erreicht ist,
j) Durchführen eines Meta-Updates der ersten Menge an Modell-Parametern für das Modell mithilfe der adaptierten zweiten Menge an Modell-Parametern THETA' auf Basis der ersten Menge an Modell-Parametern THETA,
k) Fortsetzen bei Schritt c), solange, bis ein vorbestimmte zweites Abbruchkriterium N2 erreicht ist,
l) Erneutes Trainieren des Modells mit zumindest einer weiteren Aufgabe,
m) Betrieb des technischen Geräts TD mit dem Modell.

Das Initialisieren des Modells im Schritt a) erfolgt mit zufälligen Werten. Alternativ können beispielsweise aber auch vorbestimmte Werte verwendet werden.

Das Auswählen zumindest einer Aufgabe im Schritt c) erfolgt zufällig. Alternativ können beispielsweise aber auch vorbestimmte Aufgaben verwendet werden, wie beispielsweise durch eine vorbestimmte Reihenfolge in einer verwendeten Datenstruktur zum Speichern der Menge an Aufgaben.

Das Gradienten-Verfahren ist bevorzugt der Gradient-Descent-Algorithmus.

Das Trainieren des Modells mit der zweiten Teilmenge kann beispielsweise mithilfe einer Aktualisierung nach einem modifizierten Gradient-Descent-Algorithmus erfolgen, vorzugsweise anhand von Ableitungen zweiter Ordnung.

Das Bestimmen der adaptierten zweiten Menge an Modell-Parametern kann beispielsweise mithilfe einer Aktualisierung nach einem modifizierten Gradient-Descent-Algorithmus erfolgen.

Das vorbestimmte erste Abbruchkriterium kann das Erreichen einer vorbestimmten ersten Anzahl N1 an Wiederholungen sein.

Das vorbestimmte zweite Abbruchkriterium kann das Erreichen einer vorbestimmten zweiten Anzahl N2 an Wiederholungen sein. Die Geräte-Parameter können eine Kombination von Geräte-Kenngrößen und/oder einen Werte-Bereich für zumindest eine Geräte-Kenngröße umfassen.

### Bezugszeichenliste:

*f_{θ}* Modell-Architektur
K1, K2 Anzahl an Aufgaben
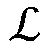 Verlustfunktion
M Speicher
N Gesamt-Anzahl an Klassen
N1, N2 Anzahl an Wiederholungen
p(T) Verteilungsfunktion über die Aufgaben
PD Rechenvorrichtung
P Prozessor
S Stichprobe
T Aufgabe, Task
TD technisches Gerät
THETA (*θ*), THETA' (*θ'*) Modell-Parameter, modifizierter Modell-Parameter
*α, β* Hyperparameter

## Patentansprüche

1. Computer-implementiertes Verfahren zum Betrieb eines technischen Geräts (TD) mit einem Meta-Learning-Modell, wobei das technische Gerät Betriebsmodi aufweist, welche durch jeweilige vorbestimmte Geräte-Parameter definiert sind, und folgende Schritte ausgeführt werden:
a) Erzeugen und Initialisieren des Modells für das technische Gerät (TD) in Betriebsumgebungen, welche durch jeweilige Betriebsparameter definiert sind, und das Modell durch eine erste Menge an Modell-Parametern (THETA) definiert ist,
b) Erzeugung einer Menge von Machine Learning Aufgaben, wobei eine Aufgabe aus der Menge von Aufgaben einen Betrieb des technischen Geräts (TD) in einer Betriebsumgebung mit Betriebsparametern definiert, und alle Aufgaben aus der Menge von Aufgaben in allen Betriebsmodi für das technische Gerät (T_{D}) übereinstimmen,
c) Auswählen zumindest einer Aufgabe (T) aus der Menge von Aufgaben,
d) Bestimmen einer ersten Teilmenge in Form von Stichproben mit einer vordefinierten ersten Anzahl (K1) an Aufgaben aus der Menge von Aufgaben, welche einen zulässigen Betriebsmodus aufweisen,
e) Bestimmen einer zweiten Teilmenge in Form von Stichproben mit einer vordefinierten zweiten Anzahl (K2) an Aufgaben aus der Menge von Aufgaben, welche alle Betriebsmodi aufweisen,
f) Trainieren des Modells mit der ersten Teilmenge mithilfe von Aktualisierungen nach einem Gradienten-Verfahren,
g) Trainieren des Modells mit der zweiten Teilmenge, mithilfe von Aktualisierungen nach einem Gradienten-Verfahren,
h) Bestimmen einer adaptierten zweiten Menge an Modell-Parametern (THETA') aus dem Modell mithilfe von Aktualisierungen nach einem Gradienten-Verfahren,
i) Fortsetzen bei Schritt d), solange, bis ein vorbestimmtes erstes Abbruchkriterium (N1) erreicht ist,
j) Durchführen eines Meta-Updates der ersten Menge an Modell-Parametern für das Modell mithilfe der adaptierten zweiten Menge an Modell-Parametern (THETA') auf Basis der ersten Menge an Modell-Parametern (THETA),
k) Fortsetzen bei Schritt c), solange, bis ein vorbestimmte zweites Abbruchkriterium (N2) erreicht ist,
l) Erneutes Trainieren des Modells mit zumindest einer weiteren Aufgabe,
m) Betrieb des technischen Geräts (TD) mit dem Modell.

2. Verfahren nach dem vorhergehenden Anspruch, wobei das Gradienten-Verfahren der Gradient-Descent-Algorithmus ist.

3. Verfahren nach Anspruch 2, wobei das Trainieren des Modells mit der zweiten Teilmenge mithilfe einer Aktualisierung nach einem modifizierten Gradient-Descent-Algorithmus erfolgt, vorzugsweise anhand von Ableitungen zweiter Ordnung.

4. Verfahren nach einem der Ansprüche 2 oder 3, wobei das Bestimmen der adaptierten zweiten Menge an Modell-Parametern mithilfe einer Aktualisierung nach einem modifizierten Gradient-Descent-Algorithmus erfolgt.

5. Verfahren nach einem der vorhergehenden Ansprüche, wobei das vorbestimmte erste Abbruchkriterium das Erreichen einer vorbestimmten ersten Anzahl (N1) an Wiederholungen ist.

6. Verfahren nach einem der vorhergehenden Ansprüche, wobei das vorbestimmte zweite Abbruchkriterium das Erreichen einer vorbestimmten zweiten Anzahl (N2) an Wiederholungen ist.

7. Verfahren nach einem der vorhergehenden Ansprüche, wobei die Geräte-Parameter eine Kombination von Geräte-Kenngrößen und/oder einen Werte-Bereich für zumindest eine Geräte-Kenngröße umfassen.

8. Verfahren nach einem der vorhergehenden Ansprüche, wobei das Initialisieren des Modells mit zufälligen Werten erfolgt.

9. Verfahren nach einem der vorhergehenden Ansprüche, wobei das Auswählen zumindest einer Aufgabe (T) zufällig erfolgt.

10. System zum Betrieb eines technischen Geräts mit einem Meta-Learning-Modell, umfassend eine Rechenvorrichtung (PD) mit einem Prozessor und einem Speicher, welche dazu eingerichtet ist, das technische Gerät zu betreiben, und das System dazu konfiguriert ist, das Verfahren nach einem der vorhergehenden Ansprüche auszuführen.

11. Computer-Programm-Produkt mit darin gespeicherten maschinenlesbaren Anweisungen, die, wenn sie von einer Verarbeitungseinheit ausgeführt werden, diese veranlassen, das Verfahren nach einem der Ansprüche 1 bis 9 auszuführen.

## Claims

1. Computer implemented method for operating a technical device (TD) with a meta-learning model, wherein the technical device has operating modes which are defined by respective predetermined device parameters, and the following steps are executed:
a) generating and initialising the model for the technical device (TD) in operating environments which are defined by respective operating parameters, and the model is defined by a first set of model parameters (THETA),
b) generating a set of machine learning tasks, wherein one task from the set of tasks defines an operation of the technical device (TD) in an operating environment with operating parameters, and all tasks from the set of tasks match in all operating modes for the technical device (TD),
c) selecting at least one task (T) from the set of tasks,
d) determining a first subset in the form of samples, with a predefined first number (K1) of tasks from the set of tasks, which have a permissible operating mode,
e) determining a second subset in the form of samples, with a predefined second number (K2) of tasks from the set of tasks, which have all operating modes,
f) training the model with the first subset, with the aid of updates according to a gradient method,
g) training the model with the second subset, with the aid of updates according to a gradient method,
h) determining an adapted second set of model parameters (THETA') from the model with the aid of updates according to a gradient method,
i) continuing with step d) until a predetermined first termination criterion (N1) is reached,
j) carrying out a meta update of the first set of model parameters for the model with the aid of the adapted second set of model parameters (THETA') on the basis of the first set of model parameters (THETA),
k) continuing with step c) until a predetermined second termination criterion (N2) is reached,
l) re-training the model with at least one further task,
m) operating the technical device (TD) with the model.

2. Method according to the preceding claim, wherein the gradient method is the gradient descent algorithm.

3. Method according to claim 2, wherein the model with the second subset is trained with the aid of an update according to a modified gradient descent algorithm, preferably on the basis of second order derivatives.

4. Method according to one of claims 2 or 3, wherein the adapted second set of model parameters is determined with the aid of an update according to a modified gradient descent algorithm.

5. Method according to one of the preceding claims, wherein the predetermined first termination criterion is reaching a predetermined first number (N1) of repetitions.

6. Method according to one of the preceding claims, wherein the predetermined second termination criterion is reaching a predetermined second number (N2) of repetitions.

7. Method according to one of the preceding claims, wherein the device parameters comprise a combination of device characteristic variables and/or a value range for at least one device characteristic variable.

8. Method according to one of the preceding claims, wherein the model is initialised with random values.

9. Method according to one of the preceding claims, wherein at least one task (T) is randomly selected.

10. System for operating a technical device with a meta-learning model, comprising a computing apparatus (PD) with a processor and a memory, which is equipped to operate the technical device, and the system is configured to execute the method according to one of the preceding claims.

11. Computer program product with machine-readable instructions stored therein which, when they are executed by a processing unit, prompt it to execute the method according to one of claims 1 to 9.

## Revendications

1. Procédé implémenté par ordinateur pour le fonctionnement d'un appareil technique (TD) avec un modèle de méta-apprentissage, dans lequel l'appareil technique présente des modes de fonctionnement qui sont définis par des paramètres d'appareil prédéterminés respectifs, et les étapes suivantes sont exécutées :
a) production et initialisation du modèle pour l'appareil technique (TD) dans des environnements de fonctionnement qui sont définis par des paramètres de fonctionnement respectifs, et le modèle est défini par un premier ensemble de paramètres de modèle (THETA),
b) production d'un ensemble de tâches d'apprentissage machine, dans lequel une tâche de l'ensemble de tâches définit un fonctionnement de l'appareil technique (TD) dans un environnement de fonctionnement avec des paramètres de fonctionnement, et toutes les tâches de l'ensemble de tâches coïncident dans tous les modes de fonctionnement pour l'appareil technique (TD),
c) sélection d'au moins une tâche (T) de l'ensemble de tâches,
d) détermination d'un premier sous-ensemble sous la forme d'échantillons avec un premier nombre prédéfini (K1) de tâches de l'ensemble de tâches qui présentent un mode de fonctionnement autorisé,
e) détermination d'un deuxième sous-ensemble sous la forme d'échantillons avec un deuxième nombre prédéfini (K2) de tâches de l'ensemble de tâches qui présentent tous les modes de fonctionnement,
f) entraînement du modèle avec le premier sous-ensemble à l'aide d'actualisations selon un procédé de gradient,
g) entraînement du modèle avec le deuxième sous-ensemble à l'aide d'actualisations selon un procédé de gradient,
h) détermination d'un deuxième ensemble adapté de paramètres de modèle (THETA') à partir du modèle à l'aide d'actualisations selon un procédé de gradient,
i) reprise de l'étape d) jusqu'à ce qu'un premier critère d'interruption prédéterminé (N1) soit obtenu,
j) mise en œuvre d'une méta-mise à jour du premier ensemble de paramètres de modèle pour le modèle à l'aide du deuxième ensemble adapté de paramètres de modèle (THETA')sur la base du premier ensemble de paramètres de modèle (THETA),
k) reprise de l'étape c) jusqu'à ce qu'un deuxième critère d'interruption prédéterminé (N2) soit obtenu,
l) nouvel entraînement du modèle avec au moins une autre tâche,
m) fonctionnement de l'appareil technique (TD) avec le modèle.

2. Procédé selon la revendication précédente, dans lequel le procédé de gradient est l'algorithme de descente de gradient.

3. Procédé selon la revendication 2, dans lequel l'entraînement du modèle avec le deuxième sous-ensemble s'effectue à l'aide d'une actualisation selon un algorithme de descente de gradient modifié, de préférence à l'aide de dérivées du second ordre.

4. Procédé selon l'une des revendications 2 ou 3, dans lequel la détermination du deuxième ensemble adapté de paramètres de modèle s'effectue à l'aide d'une actualisation selon un algorithme de descente de gradient modifié.

5. Procédé selon l'une des revendications précédentes, dans lequel le premier critère d'interruption prédéterminé est l'obtention d'un premier nombre prédéterminé (N1) de répétitions.

6. Procédé selon l'une des revendications précédentes, dans lequel le deuxième critère d'interruption prédéterminé est l'obtention d'un deuxième nombre prédéterminé (N2) de répétitions.

7. Procédé selon l'une des revendications précédentes, dans lequel les paramètres d'appareil comportent une combinaison de grandeurs caractéristiques d'appareil et/ou une plage de valeurs pour au moins une grandeur caractéristique d'appareil.

8. Procédé selon l'une des revendications précédentes, dans lequel l'initialisation du modèle s'effectue avec des valeurs aléatoires.

9. Procédé selon l'une des revendications précédentes, dans lequel la sélection d'au moins une tâche (T) s'effectue de manière aléatoire.

10. Système pour le fonctionnement d'un appareil technique avec un modèle de méta-apprentissage, comportant un dispositif de calcul (PD) avec un processeur et une mémoire, lequel est conçu pour faire fonctionner l'appareil technique, et le système étant configuré pour exécuter le procédé selon l'une des revendications précédentes.

11. Produit de programme informatique dans lequel sont stockées des instructions lisibles par machine qui, lorsqu'elles sont exécutées par une unité de traitement, amènent celle-ci à exécuter le procédé selon l'une des revendications 1 à 9.
